# EUROPEAN PATENT SPECIFICATION

(11) **EP 3 754 649 B1**
(45) Date of publication and mention of the grant of the patent: **29.04.2026**
(21) Application number: 19754574.2
(22) Date of filing: 29.01.2019
(51) Int. Cl.: G10K 11/24, G01F 23/296

(54) **ACOUSTIC WAVEGUIDE**
AKUSTISCHER WELLENLEITER
GUIDE D'ONDES ACOUSTIQUE

(30) Priority: 14.02.2018 RU 2018105641
(43) Date of publication of application: 23.12.2020
(73) Proprietor: Demchenko, Aleksandr Petrovich, St.Petersburg, 191186 (RU); Balin, Nikolai Ivanovich, St. Petersburg 196158 (RU)
(72) Inventor: Demchenko, Aleksandr Petrovich, St.Petersburg, 191186 (RU); Balin, Nikolai Ivanovich, St. Petersburg 196158 (RU)
(74) Representative: Sloboshanin, Sergej
(86) International application number: PCT/RU2019/000052
(87) International publication number: WO 2019/160443

(56) References cited:
- JP-A- S 502 519
- RU-C2- 2 201 169
- US-A- 3 229 523
- US-A- 3 708 745
- US-A- 3 708 745
- US-A- 4 217 786
- US-A- 5 022 014
- US-A- 5 966 983
- US-A1- 2009 192 388
- ANONYMOUS: "Datchiki i sistemy sudovoi avtomatiki", DOCPLAYER, 2017, pages 7, XP055633289, Retrieved from the Internet <URL:https://docplayer.ru/31881415-Datchiki-i-sistemy-cudovoy-avtomatiki.html>

## Description

The invention relates to devices for transmitting ultrasonic oscillatory energy from a source to a receiver and/or in the opposite direction.

In terms of design, ultrasonic acoustic waveguides usually take the form of a tube, a rod, a plate, or a combination thereof, the shape, design and dimensions of which are determined by the specified task and the operating conditions.

Acoustic waveguides may be used for measuring the characteristics of materials or the parameters of a medium, and in signaling devices.

Examples of the design of waveguides are described in patent documents.

The patent US8746399, published 10.06.2014, IPC G10K11/00, discloses the design of a waveguide in the form of a rod, with a device for securing it in its passage through a tube, providing an effective seal even in high-pressure conditions.

The application WO2017062006, published 13.04.2017, IPC E21B47/12, discloses an acoustic waveguide device for connection between a downhole transmitter and a receiver on the surface. The waveguide in the well shaft takes the form of a static waveguide, comprising a casing string or production column, in which the tubular well column takes the form of a dynamic tube comprising a flexible column or linked column.

Ultrasonic waveguides are used for generating, transmitting and/or receiving signals in the form of sonic or ultrasonic oscillations during operation in extreme conditions. For example, in conditions of extremely low or high temperatures, significant density of the environment, high penetrating radiation activity, powerful electromagnetic interference, strong vibrations, or the presence of corrosive substances that are dangerous for the elements of the device.

Document JP S50 2519 A refers to a transmission cable of an ultrasonic processing apparatus. The transmission cable is flexible and configured to transmit ultrasonic vibration to a tip tool. The transmission cable comprises an input horn, an output horn and a plurality of thin metal wires attached to the input horn and the output horn, respectively.

From document US 3 708 745 A a system for measuring output power of a resonant piezoelectric electromechanical transducer is known. The system utilizes a resonant piezoelectric electromechanical transducer of the horn type. A transmission line is connected to the tip of the horn. The length of the transmission line is in multiples of one-half wavelength. A transducer whose output capabilities are to be measured is connected to the other end of the transmission line and therefore excited mechanically. The electrical signal derived therefrom is indicative of its output parameters.

The technical result to be achieved in the present invention is the increase in the functional capacities of the acoustic waveguide, enabling it to be used in devices operating in conditions of high temperature, radiation and powerful electromagnetic interference and in the presence of other negative factors.

The present invention refers to an acoustic waveguide as set forth in independent claim 1.

The acoustic waveguide comprises a flexible metal rod, to each end of which a cylindrical waveguide is rigidly attached through a conical acoustic concentrator, one cylindrical waveguide being made for attachment to an electroacoustic transducer, while the other cylindrical waveguide is made for attachment to a receiving device for receiving acoustic oscillations.

The term "receiving device" in the present case denotes a device that can receive or excite acoustic signals in the antennas of various devices, transform the energy of mechanical oscillations into acoustic oscillations, and receive or transmit information in the form of a sequence of pulses or information encoded in the frequency or amplitude of acoustic oscillations.

The main and unobvious property of said acoustic waveguide design is the possibility of placing the electroacoustic transducer and receiving device in any position, being separated by a significant distance. This is achieved because of the fact that the flexible metal rod of the waveguide may be bent within wide limits, may take various forms, and may be placed in corrosive media. The cylindrical waveguides of the acoustic waveguide may be rigidly and hermetically attached to any barriers such as walls, partitions, bulkheads or the like. For example, a cylindrical waveguide on an external surface may simply be welded into a metal wall.

This enables the structure of the electroacoustic transducer, and of the receiving device if necessary, to be isolated from any negative factors. The part played by the third element of the design, namely the conical acoustic concentrators, is also extremely important. They enable the acoustic properties of the flexible metal rod and cylindrical waveguide to be acoustically matched with one another.

Commonly, the flexible metal rod is made so that it can be given the shape required for its positioning in the space allocated to it.

The flexible metal rod may be made in the form of a wire with a diameter of not more than 6 mm. In the present case, the placing of the flexible metal waveguide in space may be carried out in the simplest way.

The conical acoustic concentrator is rigidly attached by its vertex to the flexible metal rod, and is attached to the cylindrical waveguide by its wide part.

In addition, the vertex of said conical acoustic concentrator may have a diameter equal to the diameter of the flexible metal rod, and the wide part of said conical acoustic concentrator a diameter equal to the diameter of the cylindrical waveguide.

The cylindrical waveguide may be made so that it can be rigidly connected to the receiving device.

The outer surface of at least one cylindrical waveguide is made so that it can be rigidly and hermetically attached to the barrier through which the waveguide is to pass.

In order to lengthen the service life, stabilize the characteristics of the waveguide over time, protect against possible corrosion and provide hermetic sealing when this part of the waveguide is in viscous liquid media, the part of the waveguide including the flexible metal rod and the conical acoustic concentrators are placed in a flexible protective tube.

The flexible protective tube may be made hermetic and is fitted internally with adapters for fastening the flexible waveguide inside the protective tube, and the ends of the protective tube may be provided with attachment fittings of said tube to the outer surfaces of the cylindrical waveguides.

The invention is illustrated with drawings.
Fig. 1 shows a general view of the acoustic waveguide.
Fig. 2 shows the design of the acoustic waveguide with a flexible protective tube.
Fig. 3 shows the design of the cylindrical waveguide with a conical acoustic concentrator.
Fig. 4 shows part of the casing of the acoustic waveguide with adapters.
Fig. 5 shows an example of the use of the acoustic waveguide in the structure of an ultrasonic sensor.

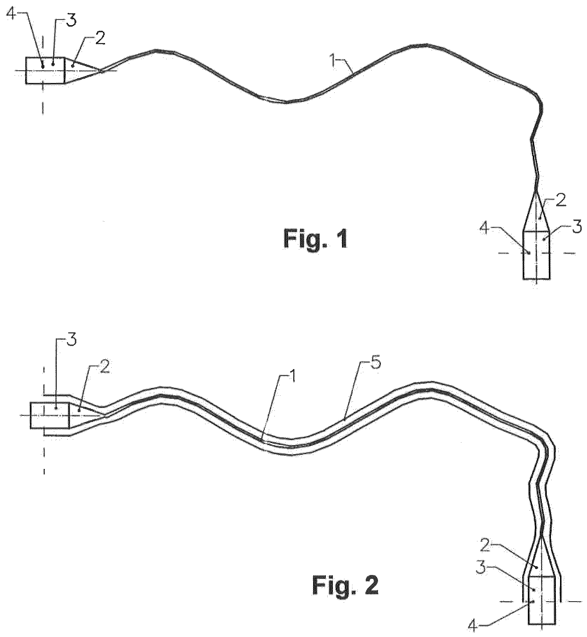

The acoustic waveguide (Fig. 1) comprises a flexible metal rod 1, to each end of which a conical acoustic concentrator 2 is attached rigidly by its vertex.

The cylindrical parts of the waveguide, distinguished by their diameters, differ in their acoustic impedance: the smaller the diameter, the smaller is the acoustic impedance. And vice versa.

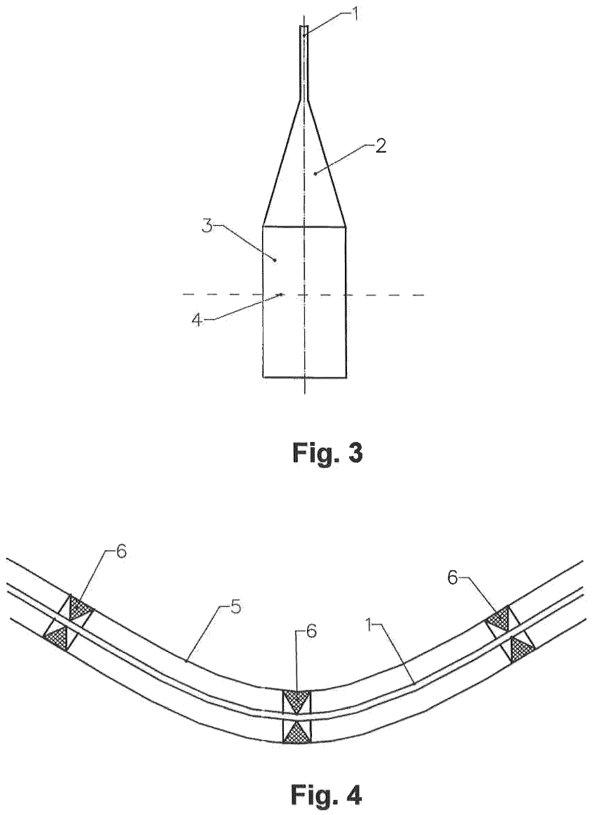

A cylindrical waveguide 3 is rigidly attached to the wide part of each conical acoustic concentrator 2. The flexible metal rod 1 may be made in the form of a flexible bar or wire with a diameter of not more than 6 mm. The outer surface of the cylindrical waveguide 3 comprises a region 4 (Figs. 1 and 3) by which the cylindrical waveguide 3 may be rigidly and hermetically attached in the barrier which the waveguide is to pass through.

When a welding method was used to attach the cylindrical waveguide to the barrier, the seam thickness was much smaller than the wavelength of the oscillations in the waveguide material and smaller than the diameter of the waveguide. At frequencies of about 100 kHz and with a waveguide diameter of 16 mm, for example, the seam may be of the order of a few millimeters. The thicker the seam, the greater are the acoustic energy losses.

The part of the acoustic waveguide comprising the flexible metal rod 1 and the conical acoustic concentrators 2 is placed in a flexible protective tube 5, for example a hermetically sealed corrugated metal tube, in order to protect them from contaminants, liquids and damage (Fig. 2).

The flexible protective tube 5 is fitted with adapters 6 (Fig. 4) for attaching said tube 5 to the outer surfaces of the flexible metal rod 1. The adapters 6 take the form of conical inserts with an inner aperture for the wire which is roughly slightly larger than the diameter of the flexible rod (wire) 1. The ends of the protective tube 5 may be provided with attachment fittings of said tube to the outer surfaces of the cylindrical waveguides.

For matching the portions with different acoustic impedances, conical concentrators are used in the present design. These act as acoustic energy transducers and transformers. In the transition from the large diameter to the small diameter in the concentrator, the acoustic energy is transformed: the oscillation speed increases and the sound pressure and acoustic impedance simultaneously decrease. Conversely, in the transition from the small to the large diameter, the oscillation speed decreases and the acoustic pressure and acoustic impedance increase. At frequencies of about 100 kHz, for example, a half-wave metal conical concentrator has a length of approximately 2-3 cm.

The conflicting requirements placed on the present design make it necessary to use portions with a relatively small diameter of not more than 6 mm and portions with a relatively large diameter of 12 - 20 mm in the design of the waveguide. On the one hand, it is necessary to provide an extended flexible part of the waveguide that can be easily assembled, integrated and laid "on site" in a real-world design. For this purpose, in the present case, the use of a relatively thin, flexible, metal wire is proposed. On the other hand, it is necessary to provide a part with relatively large diameters for the effective matching of the waveguide to the existing electroacoustic transducers (piezoelectric elements, magnetostrictors) and for passing through metal barriers, for example by welding the large-diameter part of the waveguide into an existing barrier. The greater the diameter of this part of the waveguide, the thicker the barrier, and consequently the welding seam connecting them, may be.

All the parts of the acoustic waveguide may be made from grades of steel that withstand the action of a corrosive medium. The acoustic waveguide may therefore be used in conditions characterized by high temperatures, high penetrating radiation activity, powerful electromagnetic interference, strong vibrations, and the presence of corrosive substances in the atmosphere. Because the flexible metal rod can be made in the requisite length and in the requisite shape for positioning in the space identified for it, the acoustic waveguide can provide an acoustic link between different devices separated from one another and divided by walls, barriers or buildings.

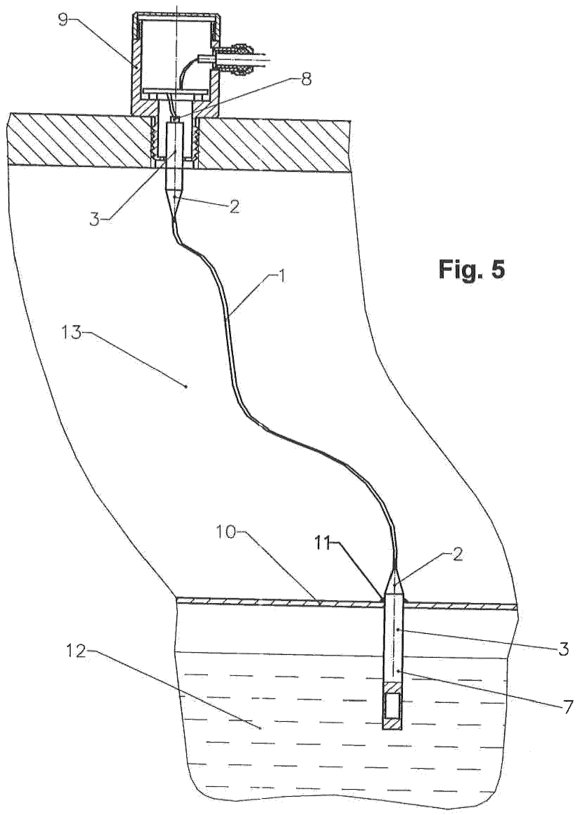

By way of example, Fig. 5 shows the design of an acoustic liquid level sensor in which the present acoustic waveguide is used.

The ultrasonic liquid level sensor comprises an acoustic resonator 7 placed in a liquid container 12 and linked by the acoustic waveguide to an electroacoustic transducer 8 (Fig. 1). The acoustic waveguide comprises a flexible metal rod 1, to each end of which a cylindrical waveguide 3 is attached rigidly through a conical acoustic concentrator 2. One cylindrical waveguide 3 is connected to the acoustic resonator 7, and the other is connected to the electroacoustic transducer 8. The flexible metal rod 1 is made in the form of a wire. The electroacoustic transducer 2 is fitted in a housing 9, enabling it to be installed on any base. Fig. 5 shows the attachment of the cylindrical waveguide 3 to a barrier 10 using a weld 11.

This arrangement of the elements of the acoustic liquid level sensor enables the electroacoustic transducer 2 to be isolated from the medium in the container 13. The acoustic waveguide is fitted into the liquid container by welding the cylindrical waveguide 3 onto the barrier 10. In this case, the mounting of the sensor is simplified. Its elements are arranged in spaces that are convenient for servicing and provide protection to personnel, during the servicing of the electroacoustic transducer and its electrical circuits, against possible corrosive media and radiation.

The pulsed acoustic oscillations are produced by means of the pulse generator of the electronic unit and the electroacoustic transducer 8 (Fig. 5). They are then transmitted through the cylindrical waveguide 3 and the acoustic concentrator 2 into the flexible metal rod 1 (the wire). The oscillations are sent from the opposite end of the thin flexible metal rod 1, by means of the acoustic concentrator 2, into the cylindrical waveguide 3, to the opposite end of which the acoustic resonator 7 is attached. Having reached the resonator, the acoustic pulse creates natural oscillations in the resonator 7, the duration of which depends on the medium (liquid or gaseous) in which it is located.

The natural oscillations of the resonator 7, being propagated in the reverse direction to the movement of the exciting pulse through the acoustic waveguide, reach the electroacoustic transducer 8. The electrical circuit of the sensor processes the received oscillations, evaluates the decrease in the attenuation of the natural oscillations of the resonator 7, and makes a decision as to whether the medium in which the resonator 7 is located is or is not liquid.

By way of other examples the use of the acoustic waveguide of the present design provides transmission of ultrasonic oscillations through a corrosive medium over a distance that may amount to several meters.

The claimed acoustic waveguide may be used in radiation transmission and reception of pulsed acoustic signals in antennas of various devices using the location principle, for example locators and distance measuring devices in a liquid or gaseous medium.

It may also be used in devices for measuring the parameters of a medium, for example temperature, pressure, density and viscosity, constructed on the principle of the relation between the frequency, amplitude and attenuation of the oscillations of the sensitive element of a sensor and the properties of the medium in which it is located.

It may also be used in devices for charging electrical accumulators through a corrosive medium through which electrical wires cannot be laid, by means of a transducer of mechanical oscillations to electrical oscillations attached to the receiving end of an acoustic waveguide and a reverse transducer attached to the other end of the same waveguide.

A last example is devices for transmitting information, for example digital information in the form of a sequence of pulses or analog information encoded in the frequency or amplitude of the oscillations through a corrosive medium, by means of electroacoustic transducers attached to both ends of the present acoustic waveguide.

## Claims

1. An acoustic waveguide, comprising a flexible metal rod (1), to each end of which a cylindrical waveguide (3) is rigidly attached through a conical acoustic concentrator (2), the acoustic waveguide further comprising a flexible protective tube (5), wherein the conical acoustic concentrator (2) is rigidly attached by its vertex to the flexible metal rod (1), and is attached to the cylindrical waveguide (3) by its wide part, one cylindrical waveguide (3) being made for its attachment to an electroacoustic transducer (8), while the other cylindrical waveguide is made for its attachment to a receiving device for receiving acoustic oscillations,
**characterized in that**
the outer surface of at least one cylindrical waveguide (3) is adapted to be rigidly and hermetically attached in a barrier (10) through which the cylindrical waveguide (3) is to pass,
and **in that** the part of the acoustic waveguide comprising the flexible metal rod (1) and the conical acoustic concentrators (2) is placed in the flexible protective tube (5), wherein the flexible protective tube (5) is provided internally with adapters (6) for fastening the flexible metal rod (1) inside the flexible protective tube (5) and the adapters (6) take the form of conical inserts with an inner aperture which is slightly larger than the diameter of the flexible metal rod (1).

2. The acoustic waveguide as claimed in claim 1, **characterized in that** the flexible metal rod (1) is adapted for giving it the shape required for its positioning in the space allocated to it.

3. The acoustic waveguide as claimed in claim 1, **characterized in that** the flexible metal rod (1) is made in the form of a wire.

4. The acoustic waveguide as claimed in claim 3, **characterized in that** said wire has a diameter of not more than 6 mm.

5. The acoustic waveguide as claimed in claim 1, **characterized in that** the vertex of said conical acoustic concentrator (2) has a diameter equal to the diameter of the flexible metal rod (1), and the wide part of said conical acoustic concentrator (2) has a diameter equal to the diameter of the cylindrical waveguide (3).

6. The acoustic waveguide as claimed in claim 1, **characterized in that** the cylindrical waveguide (3) is adapted for its rigidly connecting to the receiving device.

7. The acoustic waveguide as claimed in claim 1, **characterized in that** said flexible protective tube (5) is made hermetic and the ends of the protective tube (5) are provided with elements for attaching said tube to the outer surfaces of the cylindrical waveguides (3).

## Patentansprüche

1. Ein akustischer Wellenleiter, umfassend einen flexiblen Metallstab (1), an dessen beiden Enden jeweils ein zylindrischer Wellenleiter (3) über einen konischen akustischen Konzentrator (2) fest angebracht ist, wobei der akustische Wellenleiter ferner ein flexibles Schutzrohr (5) umfasst, wobei der konische akustische Konzentrator (2) mit seinem Scheitelpunkt fest an dem flexiblen Metallstab (1) befestigt ist und an seinem breiten Teil mit dem zylindrischen Wellenleiter (3) verbunden ist, wobei ein zylindrischer Wellenleiter (3) zur Befestigung an einem elektroakustischen Wandler (8) ausgebildet ist, während der andere zylindrische Wellenleiter zur Befestigung an einer Empfangsvorrichtung zum Empfangen akustischer Schwingungen ausgebildet ist,
**dadurch gekennzeichnet, dass**
die Außenfläche wenigstens eines zylindrischen Wellenleiters (3) zur festen und hermetischen Befestigung in einer Barriere (10), durch die der zylindrische Wellenleiter (3) hindurchführen soll, ausgebildet ist,
und dass der Teil des akustischen Wellenleiters, der den flexiblen Metallstab (1) und die konischen akustischen Konzentratoren (2) umfasst, in dem flexiblen Schutzrohr (5) angeordnet ist, wobei das flexible Schutzrohr (5) innen mit Adaptern (6) zur Befestigung des flexiblen Metallstabs (1) im Inneren des flexiblen Schutzrohrs (5) versehen ist und die Adapter (6) die Form von konischen Einsätzen mit einer Innenöffnung haben, die geringfügig größer ist als der Durchmesser des flexiblen Metallstabs (1).

2. Akustischer Wellenleiter nach Anspruch 1, **dadurch gekennzeichnet, dass** der flexible Metallstab (1) die für seine Positionierung in dem ihm zugewiesenen Raum erforderliche Form annehmend ausgebildet ist.

3. Akustischer Wellenleiter nach Anspruch 1, **dadurch gekennzeichnet, dass** der flexible Metallstab (1) in Form eines Drahtes ausgebildet ist.

4. Akustischer Wellenleiter nach Anspruch 3, **dadurch gekennzeichnet, dass** der Draht einen Durchmesser von nicht mehr als 6 mm aufweist.

5. Akustischer Wellenleiter nach Anspruch 1, **dadurch gekennzeichnet, dass** der Scheitelpunkt des konischen akustischen Konzentrators (2) einen dem Durchmesser des flexiblen Metallstabs (1) gleichen Durchmesser aufweist, und der breite Teil des konischen akustischen Konzentrators (2) einen dem Durchmesser des zylindrischen Wellenleiters (3) gleichen Durchmesser aufweist.

6. Akustischer Wellenleiter nach Anspruch 1, **dadurch gekennzeichnet, dass** der zylindrische Wellenleiter (3) zur festen Verbindung mit der Empfangsvorrichtung ausgelegt ist.

7. Akustischer Wellenleiter nach Anspruch 1, **dadurch gekennzeichnet, dass** das flexible Schutzrohr (5) hermetisch verschlossen ist und die Enden des Schutzrohrs (5) mit Elementen zur Befestigung des Rohrs an den Außenflächen der zylindrischen Wellenleiter (3) versehen sind.

## Revendications

1. Guide d'ondes acoustique, comprenant une tige métallique souple (1), à chaque extrémité de laquelle un guide d'ondes cylindrique (3) est attaché de façon rigide à travers un concentrateur acoustique conique (2), le guide d'ondes acoustique comprenant en outre un tube protecteur souple (5), dans lequel le concentrateur acoustique conique (2) est attaché de façon rigide par son sommet à la tige métallique souple (1), et est attaché au guide d'ondes cylindrique (3) par sa partie large, un guide d'ondes cylindrique (3) étant destiné à être attaché à un transducteur électroacoustique (8), alors que l'autre guide d'ondes cylindrique est destiné à être attaché à un dispositif récepteur pour recevoir des oscillations acoustiques,
**caractérisé en ce que**
la surface externe d'au moins un guide d'ondes cylindrique (3) est adaptée pour être attachée de façon rigide et hermétique dans une barrière (10) à travers laquelle le guide d'ondes cylindrique (3) doit passer,
et **en ce que** la partie du guide d'ondes comprenant la tige métallique souple (1) et les concentrateurs acoustiques coniques (2) est placée dans un tube protecteur souple (5), dans lequel le tube protecteur souple (5) est pourvu à l'intérieur d'adaptateurs (6) pour fixer la tige métallique souple (1) à l'intérieur du tube protecteur souple (5) et les adaptateurs (6) sont sous la forme d'inserts coniques avec un orifice interne qui est légèrement plus grand que le diamètre de la tige métallique souple (1).

2. Guide d'ondes acoustique selon la revendication 1, **caractérisé en ce que** la tige métallique souple (1) est adaptée pour lui donner la forme requise pour son positionnement dans l'espace qui lui est alloué.

3. Guide d'ondes acoustique selon la revendication 1, **caractérisé en ce que** la tige métallique souple (1) est réalisée sous la forme d'un fil.

4. Guide d'ondes acoustique selon la revendication 3, **caractérisé en ce que** ledit fil présente un diamètre ne dépassant pas 6 mm.

5. Guide d'ondes acoustique selon la revendication 1, **caractérisé en ce que** le sommet dudit concentrateur acoustique conique (2) présente un diamètre égal au diamètre de la tige métallique souple (1), et la partie large dudit concentrateur acoustique conique (2) présente un diamètre égal au diamètre du guide d'ondes cylindrique (3).

6. Guide d'ondes acoustique selon la revendication 1, **caractérisé en ce que** le guide d'ondes cylindrique (3) est adapté pour être connecté de façon rigide au dispositif récepteur.

7. Guide d'ondes acoustique selon la revendication 1, **caractérisé en ce que** ledit tube protecteur souple (5) est réalisé de façon à être hermétique et les extrémités du tube protecteur (5) sont pourvues d'éléments pour attacher ledit tube aux surfaces externes des guides d'ondes cylindriques (3).
